# EUROPÄISCHE PATENTSCHRIFT

(11) **EP 3 573 927 B1**
(45) Veröffentlichungstag und Bekanntmachung des Hinweises auf die Patenterteilung: **21.12.2022**
(21) Anmeldenummer: 18701309.9
(22) Anmeldetag: 18.01.2018
(51) Int. Cl.: C01B 21/26, C01B 21/28

(54) **VERFAHREN UND ANLAGE ZUR HERSTELLUNG VON SALPETERSÄURE**
METHOD AND PLANT FOR PRODUCING NITRIC ACID
PROCÉDÉ ET INSTALLATION POUR LA FABRICATION D'ACIDE NITRIQUE

(30) Priorität: 25.01.2017 DE 102017201180
(43) Veröffentlichungstag der Anmeldung: 04.12.2019
(73) Patentinhaber: thyssenkrupp Industrial Solutions AG, 45143 Essen (DE); thyssenkrupp AG, 45143 Essen (DE)
(72) Erfinder: KERN, Paul, 44147 Dortmund (DE)
(74) Vertreter: thyssenkrupp Intellectual Property GmbH
(86) Internationale Anmeldenummer: PCT/EP2018/051213
(87) Internationale Veröffentlichungsnummer: WO 2018/137996

(56) Entgegenhaltungen:
- EP-A1- 0 799 794
- EP-A1- 0 834 466
- DE-A1-102012 000 419
- DE-A1-102013 004 341

## Beschreibung

Die vorliegende Erfindung betrifft ein Verfahren zur Herstellung von Salpetersäure durch Oxidation von Ammoniak mit Sauerstoff in der Gegenwart von Katalysatoren zu Stickstoffmonoxid enthaltendem Prozessgas in einem Oxidationsreaktor, wobei dem im Laufe des weiteren Prozesses Stickstoffmonoxid zu Stickstoffdioxid oxidiert wird, das mit Wasser in einer Absorptionsvorrichtung zu Salpetersäure, salpetriger Säure und/oder Lösungen von Nitraten und/oder Nitriten umgesetzt wird. Gegenstand der vorliegenden Erfindung ist weiterhin eine Anlage zur Herstellung von Salpetersäure.

Bei der großtechnischen Herstellung von Stickstoff enthaltenden Grundstoffen für die chemische Industrie bildet die katalytische Oxidation von Ammoniak (NH3) zu NOₓ-Stickoxiden oftmals eine Basisreaktion. Die erzeugten Stickoxide werden beispielsweise zur Herstellung von Salpetersäure (HNO₃) als Ausgangsstoff z.B. für nitrathaltige Düngemittel eingesetzt.

Die Herstellung von Salpetersäure ist einer der etablierten Prozesse der chemischen Technik, welcher nach Einführung des Haber-Bosch-Verfahrens zur NH3-Synthese von W. Ostwald auf Basis von PlatinKatalysatoren zur industriellen Reife entwickelt wurde und dessen Konzeption auch heute noch die Basis der modernen HNO₃-Herstellung bildet.

Zur Herstellung von Salpetersäure wird zunächst Ammoniak NH₃ mit Luft reaktiv umgesetzt und Stickoxid NO erzeugt, welches dann zu Stickstoffdioxid NO₂ oxidiert wird.

Anschließend wird das so gewonnene Stickstoffdioxid NO₂ in Wasser absorbiert und es entsteht die Salpetersäure. Damit möglichst viel von dem gewonnenen Stickstoffdioxid NO₂ von Wasser absorbiert wird, geschieht die Absorption in der Regel bei erhöhtem Druck, vorzugsweise bei Drücken zwischen etwa 4 und etwa 14 bar.

Der für die Umsetzung des als Rohstoff eingesetzten Ammoniaks benötigte Sauerstoff wird in der Regel in Form von Luftsauerstoff zugeführt. Zum Zwecke der Zuführung wird die Prozessluft in einem Kompressor verdichtet und auf einen Druck gebracht, der sowohl der Oxidationsreaktion wie auch der Absorptionsreaktion angepasst ist.

Üblicherweise wird die Energie zur Kompression der Luft einerseits mittels Entspannung des aus der Absorption austretenden Restgases in einem Restgasexpander auf Umgebungsdruck und andererseits durch die Verwertung der bei den Umsetzungen freigesetzten Wärmen gewonnen. Die in verschiedenen Ausführungen errichteten Salpetersäureanlagen sind an die jeweiligen speziellen Anforderungen ihres jeweiligen Standortes angepasst.

Heutzutage erfolgt die Herstellung von Salpetersäure im Eindruck- oder im Zweidruckverfahren. Im Eindruckverfahren werden sowohl die Verbrennung als auch die Absorption bei Mitteldruck (< 8 bar) oder Hochdruck (> 8 bar) durchgeführt.

Bei großen Nenn-Kapazitäten und/oder höheren Säurekonzentrationen stellt eine nach dem Zweidruckverfahren ausgeführte Salpetersäureanlage die wirtschaftlichere Lösung dar. Beim Zweidruckverfahren geschieht die Verbrennung des eingesetzten Ammoniaks bei einem ersten Druck, nämlich bei einem - verglichen mit dem Absorptionsdruck - niedrigeren Druck. Die bei der Verbrennung gebildeten Stickstoffmonoxid (NO) enthaltenden Gase (nitrose Gase oder Nitrosegas) werden allgemein nach der Kühlung mittels Nitrosegasverdichtung auf den zweiten Druck, den Absorptionsdruck, gebracht. Der Vorteil des Zweidruck-Verfahrens liegt darin, dass die Druckstufen den jeweiligen Reaktionen angepasst sind und somit sowohl eine optimale Verbrennungsausbeute als auch eine kompakte Absorption gewährleistet wird.

Allgemein umfassen die Anlagen zur Durchführung der vorstehend diskutierten Verfahren mindestens einen Luftverdichter sowie mindestens eine Expansionsturbine für das Restgas (auch "Restgasturbine" genannt).

Solche Anlagen sind beispielsweise aus der WO 2011/054928 A1 bekannt.

Die EP 0 799 794 A1 offenbart ein Verfahren zur Herstellung von Salpetersäure, wobei das Verfahren die Schritte des Umsetzens von Ammoniak mit Sauerstoff in einem Reaktor umfasst. Bei dieser Reaktion entsteht Stickoxid, das dann oxidiert wird. Das oxidierte Produkt wird dann in einer Absorptionskolonne mit Wasser umgesetzt, um Salpetersäure zu erzeugen. Sauerstoff wird in das Verfahren zur Verwendung bei der Oxidation des Stickoxids injiziert. Der Sauerstoff wird stromabwärts des Reaktors injiziert, in dem die Reaktion von Ammoniak mit Sauerstoff zur Bildung des Stickoxids stattfindet, jedoch stromaufwärts der Absorptionskolonne, in der das oxidierte Stickoxidprodukt mit Wasser umgesetzt wird, um die Salpetersäure zu erzeugen.

Die DE 10 2012 000 419 A1 offenbart eine Niedertemperaturoxidation von Ammoniak bei der Salpetersäureherstellung. Dabei ist vorgesehen, dass ein ammoniak- und sauerstoffhaltiger Gasstrom über eine Trägerschicht von Partikeln geleitet wird, wobei die Partikel auf einer Temperatur unterhalb von 500°C gehalten werden, um eine vollständige Umwandlung von NO und NO2 zu begünstigen. Anschließend erfolgt eine Abkühlung des Gasstroms bevor der Gasstrom einer Absorption zugeführt wird.

Bei der Salpetersäureherstellung wird also Ammoniak mit Luft in Gegenwart von Platinnetzen verbrannt. Dabei werden die Netze von einem Gasgemisch aus typischerweise etwa 9 - 12 Vol.-% NH3 und Luft durchströmt, wobei sich an den Netzen durch die Exothermie der Oxidationsreaktion eine Temperatur von etwa 800 - 950°C einstellt. Dabei wird NH₃ sehr selektiv zu Stickstoffmonoxid (NO) oxidiert (A, Reaktionsschema I), welches dann im Laufe des weiteren Prozesses zu Stickstoffdioxid (NO₂) oxidiert wird (B, Reaktionsschema II) und schließlich mit Wasser in einer Absorptionsvorrichtung zu HN03 umgesetzt wird (C, Reaktionsschema III).
A) Verbrennung von Ammoniak in einem Oxidationsreaktor unter Umsetzung von Ammoniak mit Sauerstoff zu Stickoxid

   4NH₃+5 O₂ → 4 NO + 6 H₂O (I)

Die Reaktionswärme dieses exothermen Schrittes beträgt etwa -226 kJ/mol NH3.

Im Salpetersäureprozess wird in Folge dieses Reaktionsschrittes also, bezogen auf das Endprodukt, eine Wärme von maximal 226 kJ/mol HN03 erzeugt.

Auch wenn demgemäß der in der Verbrennungsluft enthaltene O₂-Gehalt von 21 Vol.-% gerade ausreicht, um formal eine vollständige Überführung von 10 Vol.-% NH3 in HN03 zu gewährleisten, wird bei der technischen Herstellung von HN03 dem Prozessgas nach der katalytischen NH3-Oxidation und vor Eintritt in die Absorptionsvorrichtung weiterer Sauerstoff, insbesondere Luftsauerstoff (Sekundärluft) zugeführt, um die folgende NO-Oxidation zu NO₂ und damit Bildung von HN03 in der Absorptionsvorrichtung zu beschleunigen. Typischerweise beträgt der Restgehalt an Sauerstoff des die letzte Absorptionsvorrichtung verlassenden Abgases ca. 1- 5 Vol.-%.

B) Oxidation von Stickstoffmonoxid zu Stickstoffdioxid

2 NO + O₂ → 2 NO₂ (II)

Die Reaktionsenthalpie dieses exothermen Schrittes ΔHr° beträgt etwa 57,2 kJ/mol NO. Im Salpetersäureprozess wird in Folge dieses Reaktionsschrittes allerdings, da die Absorption von NO₂ in Wasser als Disproportionierung unter Rückbildung von NO abläuft (vgl. C) und NO reoxidiert werden muss, bezogen auf das Endprodukt eine Wärme von ca. 85 kJ/mol HNO₃ erzeugt.

Die Reaktion läuft im Salpetersäureprozess nach dem Ostwaldverfahren als nicht-katalysierte Gasphasenreaktion ab.

C) Bildung von HN03 (Salpetersäure) durch Absorption von NO₂ in Wasser in den Kondensatoren und dem Absorptionsturm unter Rückbildung von NO

3 NO₂ + H₂O → 2 HNO₃ + NO (III)

Die Reaktionswärme dieses exothermen Schrittes beträgt etwa -58 kJ/mol HNO₃.

Als Bruttoreaktion resultiert daraus:

NH₃ + 2 O₂ → HNO₃ + H₂O (IV)

Beim Verfahren zur Herstellung von Salpetersäure handelt es sich um einen großtechnischen Prozess. Die Verfahrensabläufe solcher Prozesse unterliegen einer ständigen Optimierung, um die Energieeffizienz solcher Verfahren und Anlagen zu verbessern, deren Emissionen von Schadgasen zu reduzieren, die Ausbeute an Verfahrensprodukt zu erhöhen und schließlich die Investitionskosten zu verringern.

Aufgabe der vorliegenden Erfindung ist es, ein Verfahren zur Herstellung von Salpetersäure mit den eingangs genannten Merkmalen bereitzustellen, welches eine erhöhte Energieeffizienz aufweist, sowie eine zur Durchführung dieses Verfahrens geeignete Anlage zur Verfügung zu stellen. Außerdem sollen das Verfahren / die Anlage sich mit einfachen Mitteln verwirklichen lassen und insbesondere das Nachrüsten von bestehenden Anlagen mit einfachen Mitteln gestatten. Weiterhin ist es ein Anliegen der vorliegenden Erfindung, eine Reduktion benötigter Apparatevolumina, insbesondere bei den Absorptionsvorrichtungen zu ermöglichen.

Die Lösung der vorgenannten Aufgabe liefert ein Verfahren zur Herstellung von Salpetersäure der eingangs genannten Gattung mit den Merkmalen des Anspruchs 1 bzw. eine Anlage mit den Merkmalen des unabhängigen Vorrichtungsanspruchs.

Es wurde nun überraschenderweise gefunden, dass das Verfahren zur Produktion von Salpetersäure mit erhöhter Energieeffizienz ablaufen kann, wenn mindestens ein zusätzlicher Reaktor vorgesehen ist, in dem die NO-Oxidation (Reaktion II) lokalisiert und möglichst vollständig abläuft.

Das erfindungsgemäße Verfahren sieht vor, dass die Oxidation des NO zu NO₂ in mindestens einem zwischen dem Oxidationsreaktor und einer Absorptionsvorrichtung angeordneten und von dem NO enthaltenden Prozessgas durchströmten zusätzlichen Reaktor erfolgt und/oder dass die Oxidation des NO zu NO₂ in mindestens einem parallel zu der Absorptionsvorrichtung angeordneten zusätzlichen Reaktor erfolgt, der so mit der Absorptionsvorrichtung verschaltet ist, dass dieser von NO enthaltendem Prozessgas durchströmt wird; wobei der zusätzliche Reaktor ein Behälter beliebiger Form ist, der mit einem Katalysator für die Oxidationsreaktion von Stickstoffmonoxid zu Stickstoffdioxid beschickt ist.

Bei heutigen Salpetersäure-Herstellungsverfahren (Stand der Technik) wird die Reaktionswärme von Reaktion (I) aus der Verbrennungsreaktion auf hohem kalorischen Niveau erzeugt und in der Gaskühlungssektion des Verfahrens bzw. der Anlage weitgehend wieder zurückgewonnen und wiederverwertet.

Die Reaktionswärme aus der Absorptionsreaktion (III) wird auf sehr niedrigem kalorischen Niveau erzeugt und nahezu vollständig ins Kühlwasser abgegeben.

Die Reaktionswärme der Gasphasenreaktion (II) wird, da sich die Reaktionsgeschwindigkeit ungewöhnlicher Weise proportional zu 1/T³ verhält und nicht lokalisiert im gesamten Rohrleitungssystem abläuft, ebenso bevorzugt auf niedrigem kalorischen Niveau frei. Das Design der Gaskühlungs- bzw. der Energierückgewinnungssektion moderner Salpetersäureanlagen erlaubt jedoch immerhin die Nutzung von etwa 50 % der Gesamtreaktionswärme von Reaktion (II) zur Dampferzeugung oder zur Verwertung in der Restgasturbine. Der Rest der Reaktionswärme wird jedoch in Kondensatoren bzw. in der Absorptionsvorrichtung frei und in das Kühlwasser abgegeben.

Der erfindungsgemäß eingesetzte zusätzliche Reaktor, in dem die NO-Oxidation lokalisiert abläuft, wird so in das Verfahren integriert, dass die Reaktion auf einem hohen thermischen Niveau abläuft und die anfallende Reaktionswärme somit effizient wiedergewonnen werden kann. Im Prozess fällt somit mehr nutzbare Wärme an.

Im erfindungsgemäß eingesetzten zusätzlichen Reaktor sollen typischerweise mindestens 30 Vol. % des im Prozessgas vorliegenden NO in NO₂ umgewandelt werden, vorzugsweise mindestens 50 Vol. % und ganz besonders bevorzugt mindestens 80 Vol. %.

Bevorzugt wird der zusätzliche Reaktor, in dem die NO-Oxidation lokalisiert abläuft, so im Verfahren bzw. in der Anlage angeordnet, dass die Eintrittstemperatur des NO enthaltenden Prozessgases in den Reaktor, in dem die NO-Oxidation lokalisiert abläuft, 160-350°C beträgt, bevorzugt 200-340°C, besonders bevorzugt 220-320 °C.

Eine mögliche bevorzugte Variante des Verfahrens sieht vor, dass der zusätzliche Reaktor, in dem die NO-Oxidation lokalisiert abläuft, stromabwärts des Oxidationsreaktors zur NH3-Verbrennung und einem Restgaserhitzer vorgeschaltet angeordnet ist. Unter dem Restgaserhitzer wird ein Wärmetauscher beliebiger Geometrie verstanden, in dem das NOx enthaltende Prozessgas gekühlt und Restgas, welches zwecks Energierückgewinnung einer Restgasturbine zugeführt wird, erhitzt wird.

Eine alternative bevorzugte Variante des Verfahrens sieht vor, dass der zusätzliche Reaktor, in dem die NO-Oxidation lokalisiert abläuft, stromabwärts des Oxidationsreaktors zur NH3-Verbrennung zwischen einer zusätzlichen Kompressionsstufe zur Verdichtung des Prozessgases auf den gewünschten Absorptionsdruck und einem Wärmetauscher angeordnet ist.

Eine andere alternative bevorzugte Variante des Verfahrens sieht vor, dass der zusätzliche Reaktor, in dem die NO-Oxidation lokalisiert abläuft, stromabwärts des Oxidationsreaktors zur NH₃-Verbrennung und einem Economizer vorgeschaltet angeordnet ist. Unter dem Economizer wird ein Wärmetauscher beliebiger Geometrie verstanden, in dem das NOx enthaltende Prozessgas gekühlt und entweder Wasser (meist zum, aber nicht limitiert auf den Zweck der Dampferzeugung) erwärmt oder aber direkt Dampf erzeugt wird.

Eine andere alternative bevorzugte Variante des Verfahrens sieht vor, dass der zusätzliche Reaktor, in dem die NO-Oxidation lokalisiert abläuft, stromabwärts des Oxidationsreaktors zur NH3-Verbrennung und einem Wärmetauscher vorgeschaltet angeordnet wird, der die Wärme in ein System transferiert, welches einen thermodynamischen Prozess zur Umwandlung von Wärme- in mechanische Energie vorsieht. Die Anwendung solcher Systeme in Salpetersäureanlagen wird zum Beispiel in DE 39 03 570 A1 beschrieben.

Eine andere alternative bevorzugte Variante des Verfahrens sieht vor, dass ein zusätzlicher Reaktor, in dem die NO-Oxidation lokalisiert abläuft, parallel zu einer Vorrichtung, in der die Absorption von NO₂ in Wasser abläuft, angeordnet ist und Einbindungs- und Zuführungspunkte zu dieser Vorrichtung aufweist. Der Reaktor, in dem die NO-Oxidation lokalisiert abläuft, wird also durch eine Zwischenentnahme gespeist. Zwischen dem erfindungsgemäßen Reaktor und der Absorptionsvorrichtung können optional weitere Apparate, z.B. Wärmetauscher, zwecks Wärmerekuperation angeordnet werden.

Eine alternative weitere bevorzugte Variante des Verfahrens sieht vor, dass der zusätzliche Reaktor, in dem die NO-Oxidation lokalisiert abläuft, stromabwärts des Oxidationsreaktors zur NH3-Verbrennung zwischen zwei Vorrichtungen, in denen die Absorption von NO₂ in Wasser abläuft, angeordnet wird. Zwischen dem erfindungsgemäßen Reaktor und den Vorrichtungen können optional weitere Apparate, z.B. Wärmetauscher, zwecks Wärmerekuperation angeordnet werden.

Der erfindungsgemäß eingesetzte zusätzliche Reaktor, in dem die NO-Oxidation lokalisiert abläuft, ist ein Behälter jeder Form, dessen Gesamtgasinhalt so groß ist, dass die Reaktion (II) wie bisher als nicht-katalysierte Gasphasenreaktion weitgehend vollständig ablaufen kann. Im erfindungsgemäß eingesetzten Reaktor läuft die Reaktion (II) in Gegenwart eines Katalysators ab, so dass sich gegenüber der nicht-katalysierten Gasphasenreaktion eine Beschleunigung ergibt.

Der erfindungsgemäß eingesetzte Reaktor, in dem die NO-Oxidation lokalisiert abläuft, kann durch einfache Modifikation bestehender Anlagen ausgestaltet werden. Dies ist bei der Nachrüstung bestehender Anlagen von besonderem Vorteil, da keine oder nur unwesentliche apparative Änderungen erforderlich sind. Häufig werden die Rohrleitungen für das NO enthaltende Prozessgas mit einem Katalysator für die Oxidation von NO zu NO₂ beschickt. Das kann durch Beschichtung der Innenwände dieser Rohrleitungen erfolgen und/oder durch Einbringen von Schüttungen von Formkörpern enthaltend die katalytisch aktive Komponente und/oder bestehend aus der katalytisch aktiven Komponente. Im erfindungsgemäßen Verfahren kann der Katalysator-Formkörper als Schüttung oder als geordnete Packung, z. B. von Wabenkörpern, in die Rohrleitung oder in einen Reaktor eingebaut werden.

Der erfindungsgemäß eingesetzte Reaktor kann ebenfalls als Rohrleitung ausgestaltet sein und parallel mit der Absorptionsvorrichtung verschaltet werden. Auch hier befindet sich in der Rohrleitung in der Regel ein heterogener Oxidationskatalysator, wie oben für die alternativen Verfahrensvarianten beschrieben.

Die zusätzlichen Reaktoren, in denen die NO-Oxidation lokalisiert abläuft, können aber auch in der Form von Gefäßen bzw. Behältern ausgestaltet sein, die in Rohrleitungen für NO enthaltende Gase eingebaut sind und das Volumen dieser Rohrleitungen vergrößern, so dass die Oxidationsreaktion von NO zu NO₂ hauptsächlich oder vollständig in diesen Gefäßen abläuft. Vorzugsweise sind diese Gefäße im Innenraum mit heterogenem Oxidationskatalysator ausgestattet, wie oben für die Verfahrensvarianten mit in der Form von Rohrleitungen ausgestalteten Reaktoren beschrieben.

Besonders bevorzugt werden edelmetallhaltige oder nicht-edelmetallhaltige heterogene Oxidationskatalysatoren verwendet. Diese NO-Oxidationskatalysatoren sind an sich bekannt und werden beispielsweise als Standardbauteil in der Automobilindustrie eingesetzt. Für das erfindungsgemäße Verfahren eignen sich grundsätzlich alle Katalysatoren, die als Aktivkomponente mindestens ein die Oxidationsreaktion von NO zu NO₂ katalysierendes Edelmetall, Metall oder Metalloxid enthalten.

Bei den Edelmetallen kann es sich um Silber, Gold oder um Platinmetalle handeln. Platinmetall ist dabei im Rahmen dieser Beschreibung ein Element der 5. und 6. Periode der Gruppen 8 bis 10 des Periodensystems der Elemente, also ein Element der Gruppe Ru, Rh, Pd, Os, Ir und Pt.

Bei den Nicht-Edelmetallen kann es sich beispielsweise um Eisen, Mangan, Kobalt oder Nickel oder deren Metalloxide oder mit Metallen dotierte Alumosilikate wie z.B. Zeolithe handeln.

Besonders bevorzugt werden Oxidationskatalysatoren eingesetzt, die auch vorwiegend in Dieselmotoren zur Minderung des Schadstoffausstoßes zum Einsatz kommen. Dabei handelt es sich in der Regel um geträgerte Katalysatoren. Bevorzugt sind Formkörper, die mit edelmetallhaltigen Beschichtungen versehen sind. Zu deren Herstellung können fein verteilte Edelmetall-Partikel, insbesondere Partikel der Edelmetalle Platin und/oder Palladium auf oxidischen Beschichtungen bzw. Trägermaterialien, wie z. B. Aluminiumoxid, abgeschieden werden.

Zur Formgebung einer solchen Aktivkomponente kann diese in eine beliebige, vorzugsweise keramische Matrix eingearbeitet bzw. eingebettet oder auf einen beliebigen, vorzugsweise keramischen Träger aufgebracht werden.

Bevorzugt ist keramisches Trägermaterial basierend auf Oxiden, Carbiden oder Nitriden der Elemente ausgewählt aus der Gruppe Si, AI, Mg, Zr und B; insbesondere bevorzugt sind keramische Materialien wie Cordierit, Mullit, Magnesiumoxid oder ganz besonders Siliziumcarbid, welches durch eine hohe chemische und mechanische Widerstandfähigkeit und herausragende Wärmeleitfähigkeit ausgezeichnet ist.

Besonders bevorzugte heterogene Oxidationskatalysatoren sind mit katalytisch aktiven Materialien beschichtete Wabenkörper (sog. Monolithe). Diese beschichteten Wabenkörper können in die Rohrleitung direkt integriert werden und bilden dann zusammen mit der Rohrleitung den erfindungsgemäß eingesetzten Reaktor, in dem die NO-Oxidation lokalisiert abläuft.

Solche Katalysatoren können nach Standardverfahren der Katalysatorherstellung erzeugt werden.

Weiterhin besonders geeignet und im Sinne der Erfindung bevorzugt ist die Verwendung von Vollkatalysatoren, d.h. von Formkörpern, welche im Wesentlichen aus katalytisch aktivem Material bestehen. So sollten die Katalysator-Formkörper zu mehr als 70%, bevorzugt zu mehr 80%, besonders bevorzugt zu mehr als 85%, bezogen auf das Gesamtgewicht des Formkörpers, aus katalytisch aktivem Material bestehen.

Der Katalysator-Formkörper kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird. Typisch sind alle in der Katalyse bekannten Geometrien, wie z.B. Zylinder, Hohlzylinder, Mehrlochzylinder, Ringe, Granulatbruch, Trilobes oder Wabenstrukturen. Besonders bevorzugt sind wabenförmige Monolithe in der Ausführung aus Vollkatalysator. Ebenso bevorzugt sind sogenannte Minilithe, d.h. sehr kleine wabenförmige Formkörper, welche im Allgemeinen als Schüttgut verwendet werden. Die Formkörper können durch in der keramischen Verarbeitung bekannte Formgebungsverfahren wie z.B. Trockenpressen, Granulieren oder Extrudieren, hergestellt werden.

Die Anordnung der Katalysator-Formkörper im erfindungsgemäß eingesetzten Reaktor kann beispielsweise als regellose Schüttung oder als geordnete Packung ausgeführt sein.

Besonders wenn eine regellose Schüttung von Katalysatorvollkörpern genutzt werden soll, so ist eine bevorzugte Ausführung des erfindungsgemäßen Reaktors ein Radialreaktor. Hier wird der Katalysator bzw. die Katalysatoren in ein konzentrisches Katalysatorbett eingebracht, welches vom Prozessgas entweder von innen nach außen oder von außen nach innen durchströmt wird.

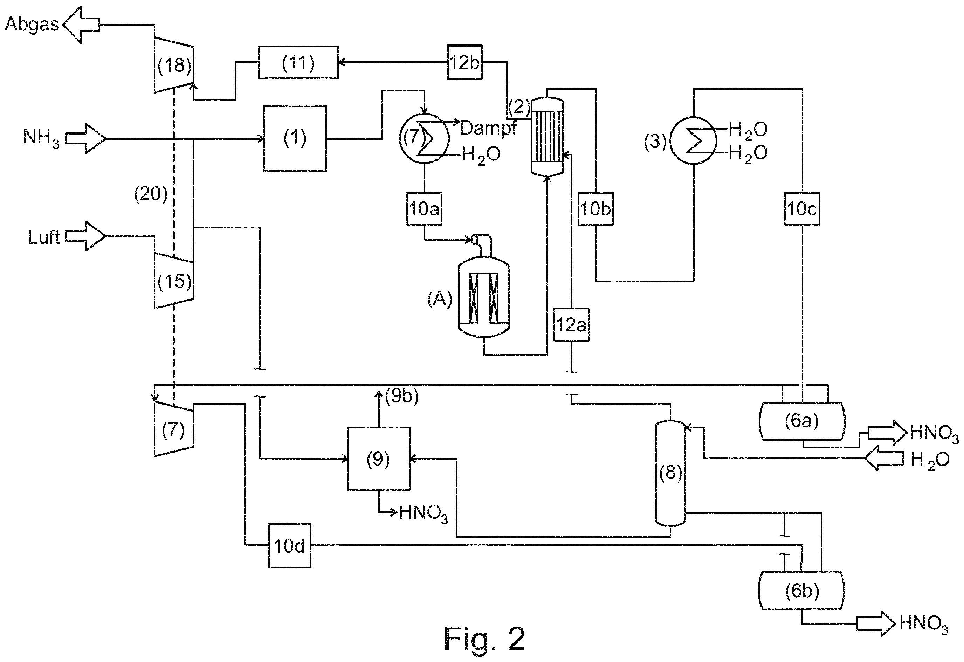

Eine Prozesssimulation zeigt, dass sich der Anteil der aus Reaktion (II) entstehenden wiederverwertbaren Wärme bereits durch das Vorsehen eines Reaktors A (vgl. Fig. 2) von 50-55 % auf etwa 70-75 % erhöhen lässt. Das entspricht einer Energie von etwa 3-4 MW in einer Salpetersäureanlage mit einer Kapazität von 1000 tato. Durch das Vorsehen weiterer Reaktoren lässt sich dieser Anteil weiter steigern.

Zusätzlich zu dem oben geschilderten Energiegewinn aus der quantitativen Durchführung von Reaktion (II) auf höherem kalorischem Niveau ergeben sich durch den erfindungsgemäßen Einsatz der Reaktoren, in denen die NO-Oxidation lokalisiert abläuft, weitere Vorteile:
- erste und zweite Kühler und Kondensatoren können effizienter betrieben werden, wodurch eine Entlastung der Absorptionsvorrichtung erfolgt und diese gegebenenfalls kleiner ausgelegt werden kann;
- in einer Zweidruckanlage kann der Volumenstrom vom ersten Kühler und Kondensator zum NO Kompressor aufgrund geringer Temperaturzunahme in der Rohrleitung zum NO Kompressor verringert werden;
- die Volumenströme in der Anlage sind aufgrund der mit Reaktion (II) verbundenen Volumenabnahme geringer; damit ergeben sich geringere Druckverluste in den Rohrleitungen;
- es besteht eine insgesamt gesteigerte Auslegungssicherheit für Wärmetauscher, insbesondere für den Wärmetauscher/Restgaserhitzer und damit die Abgasnachbehandlung aufgrund der definierten Lage des NO/NO2 Gleichgewichts;
- Vorgaben für nötige Rohrleitungsvolumina (für ausreichend ablaufende Oxidation (II)) entfallen; dadurch entstehen neue Potentiale für die Optimierung der Apparateaufstellung, sowie geringere Rohrleitungsgewichte und insgesamt weniger Platzbedarf für die Anlage;
- der Kühlwasserverbrauch lässt sich senken;
- es kann eine gesteigerte Sicherheit gegenüber dem Risiko eines Ammoniakdurchbruchs im NH3-Oxidationsreaktor geschaffen werden, da die erfindungsgemäß eingesetzten Katalysatoren häufig auch eine Aktivität zur Oxidation von Ammoniak zu Stickstoff aufweisen.

Gegenstand der vorliegenden Erfindung ist weiterhin eine Anlage zur Herstellung von Salpetersäure umfassend mindestens die folgenden Elemente:
A) mindestens einen Oxidationsreaktor zur Ammoniakoxidation ausgestattet mit mindestens einer Zuleitung für ein Ammoniak und Sauerstoff enthaltendes Eduktgasgemisch und mit mindestens einer Ableitung für ein Stickstoffmonoxid (NO) enthaltendes Prozessgas,
B) einen Katalysator für die Oxidation von Ammoniak mit Sauerstoff im Innern des Oxidationsreaktors,
C) mindestens eine Absorptionsvorrichtung zur Absorption von Stickstoffdioxid (NO₂) und Bildung von Salpetersäure (HNO₃), salpetriger Säure (HNO₂) oder Lösungen von Nitraten und/oder Nitriten, und
D) mindestens einen zwischen dem Oxidationsreaktor und der Absorptionsvorrichtung oder stromabwärts der Absorptionsvorrichtung angeordneten und von dem NO enthaltenden Prozessgas durchströmten zusätzlichen Reaktor zur Oxidation von NO zu NO₂ und/oder mindestens einen parallel zur Absorptionsvorrichtung angeordneten zusätzlichen Reaktor zur Oxidation von NO zu NO₂, der so mit der Absorptionsvorrichtung verschaltet ist, dass dieser von NO enthaltendem Prozessgas durchströmt wird; wobei im zusätzlichen Reaktor die Oxidationsreaktion von Stickstoffmonoxid zu Stickstoffdioxid an einem Katalysator erfolgt.

Gemäß einer bevorzugten Weiterbildung der Erfindung umfasst die Anlage weiterhin mindestens einen Restgaserhitzer mit Wärmetauscherfunktion, welcher mit der Absorptionsvorrichtung in Wirkverbindung steht und welcher von einem die Absorptionsvorrichtung verlassenden Restgasstrom durchströmt wird, wobei der zusätzliche Reaktor zwischen dem Oxidationsreaktor und einem Restgaserhitzer angeordnet ist.

Gemäß einer bevorzugten Weiterbildung der Erfindung umfasst die Anlage weiterhin mindestens einen Restgaserhitzer mit Wärmetauscherfunktion, welcher mit der Absorptionsvorrichtung in Wirkverbindung steht und welcher von einem die Absorptionsvorrichtung verlassenden Restgasstrom durchströmt wird und die Anlage umfasst weiterhin eine zusätzliche Kompressionsstufe zur Verdichtung des Prozessgases auf den gewünschten Absorptionsdruck, wobei der zusätzliche Reaktor zwischen der Kompressionsstufe und einem Restgaserhitzer angeordnet ist.

Gemäß einer bevorzugten Weiterbildung der Erfindung umfasst die Anlage weiterhin mindestens einen Restgaserhitzer mit Wärmetauscherfunktion, welcher mit der Absorptionsvorrichtung in Wirkverbindung steht und welcher von einem die Absorptionsvorrichtung verlassenden Restgasstrom durchströmt wird und die Anlage umfasst weiterhin mindestens einen von dem Prozessgasstrom durchströmten Economizer, wobei der zusätzliche Reaktor zwischen einem Restgaserhitzer und dem Economizer angeordnet ist.

Gemäß einer bevorzugten Weiterbildung der Erfindung umfasst die Anlage mindestens zwei zusätzliche Reaktoren zur Oxidation von NO zu NO₂, von denen wenigstens einer zwischen dem Oxidationsreaktor und einem Restgaserhitzer angeordnet ist und von denen wenigstens einer zwischen einer zusätzlichen Kompressionsstufe zur Verdichtung des Prozessgases auf den gewünschten Absorptionsdruck und einem weiteren Restgaserhitzer angeordnet ist.

Gemäß einer bevorzugten Weiterbildung der Erfindung umfasst die Anlage mindestens zwei zusätzliche Reaktoren zur Oxidation von NO zu NO₂, von denen wenigstens einer zwischen dem Oxidationsreaktor und einem Restgaserhitzer angeordnet ist und von denen wenigstens einer zwischen einem Restgaserhitzer und mindestens einen von dem Prozessgasstrom durchströmten Economizer angeordnet ist.

Gemäß einer bevorzugten Weiterbildung der Erfindung umfasst die Anlage mindestens zwei zusätzliche Reaktoren zur Oxidation von NO zu NO₂, von denen mindestens ein erster Reaktor im Strömungsweg des Prozessgases zwischen dem Oxidationsreaktor und einer Absorptionsvorrichtung angeordnet ist und von denen mindestens ein weiterer Reaktor im Strömungsweg entweder parallel zu einer Absorptionsvorrichtung oder einer Absorptionsvorrichtung im Strömungsweg nachgeschaltet oder zwischen zwei Absorptionsvorrichtungen, in denen die Absorption von NO₂ in Wasser abläuft, angeordnet ist.

Gemäß einer bevorzugten Weiterbildung der Erfindung umfasst die Anlage mindestens einen zusätzlichen Reaktor, der parallel zu der Absorptionsvorrichtung angeordnet ist und mit dem oberen Drittel und der Mitte oder dem unteren Drittel der Absorptionsvorrichtung verschaltet ist.

Nachfolgend wird die vorliegende Erfindung anhand von Ausführungsbeispielen unter Bezugnahme auf die beiliegenden Zeichnungen näher erläutert. Dabei zeigen:
Figur 1 eine Salpetersäureanlage nach dem Stand der Technik im Zweidruckverfahren;
Figuren 2 bis 5 jeweils modifizierte Salpetersäureanlagen gemäß möglichen Ausführungsbeispielen der vorliegenden Erfindung, am Beispiel im Zweidruckverfahren;
Figur 6 eine modifizierte Salpetersäureanlage gemäß einem möglichen Ausführungsbeispiel (E) der vorliegenden Erfindung, am Beispiel im Monodruckverfahren.

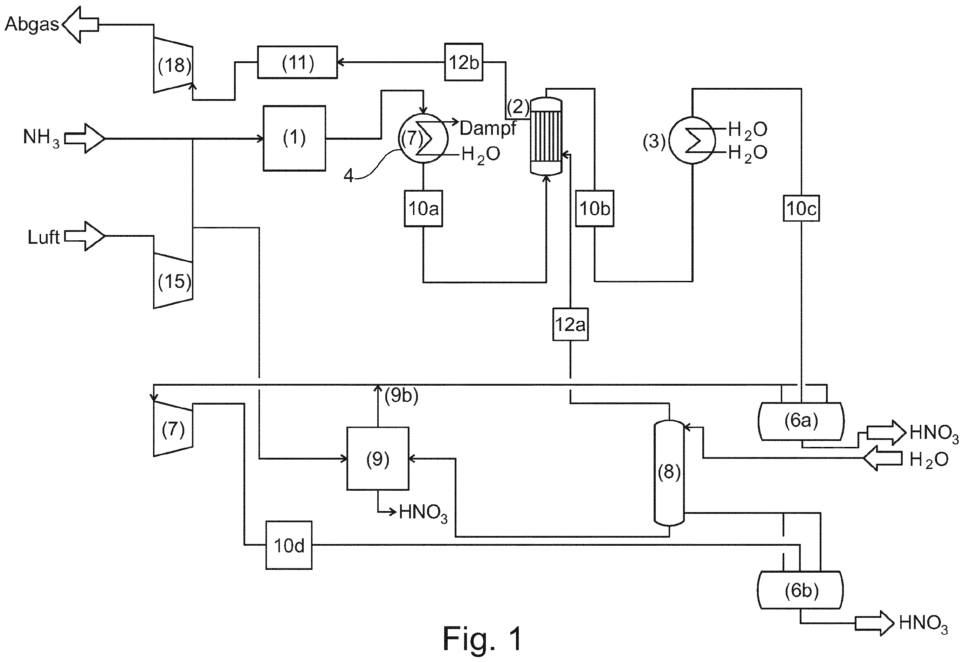

Figur 1 zeigt ein vereinfachtes Fließbild einer typischen herkömmlichen Zweidruckanlage zur Herstellung von Salpetersäure. Die Anlage umfasst einen NH3-Oxidationsreaktor 1, in dem die Oxidation des Ammoniaks zu Stickstoffoxid (NO) gemäß dem oben angegebenen Reaktionsschema (I) abläuft. Diesem NH3-Oxidationsreaktor 1 wird über einen Luftverdichter 15 Verbrennungsluft zugeführt. Gasförmiges Ammoniak wird mit der Verbrennungsluft gemischt und dieses Mischgas dann dem NH3-Oxidationsreaktor 1 zugeführt. Diesem ist zur Verwertung der hochkalorischen Verbrennungswärme meist ein Dampferzeuger 4 direkt nachgeschaltet. Das durch die Reaktion im NH3-Oxidationsreaktor 1 erzeugte NO-Gas strömt dann zu einem Restgaserhitzer 2 und dann durch einen Economizer 3 (der eine Wärmetauscherfunktion hat). Im Kühler/Kondensator 6a, wird dann das Prozessgas unterkühlt, das heißt bis unterhalb des Taupunktes gekühlt. Es erfolgt eine Teilkondensation des im Prozessgas enthaltenen Wasseranteils sowie eine anteilige Säurebildung durch Absorption (Reaktion III, Kühler/Kondensator fungiert bereits als Absorptionsapparat). Da es sich in dem Beispiel um eine Zweidruckanlage handelt, wird nachgeschaltet in einer zusätzlichen Kompressionsstufe 7 auf den gewünschten Absorptionsdruck verdichtet. Danach durchströmt das NO-Gas gegebenenfalls weitere Wärmetauscher 10d sowie einen weiteren Kühler und Kondensator 6b und gelangt dann in eine (Haupt-)Absorptionsvorrichtung 8, in der durch Absorption von NO₂ in Wasser gemäß dem obigen Reaktionsschema (III und II) das Salpetersäureprodukt gebildet wird.

Allgemein ist die Anzahl und Abfolge der zur Kühlung des Prozessgases oberhalb des Taupunktes genutzten Wärmetauscher (Restgaserhitzer, Economizer, Wärmetauscher mit anderen Kühlmedien) nicht beschränkt. Anzahl und Abfolge wird durch fertigungs-, aufstellungs- oder infrastrukturelle technische Faktoren und Designanforderungen bestimmt. An den Stellen 10a, 10b, 10c, 10d können jeweils weitere Restgaserhitzer, Economizer oder Wärmetauscher mit anderen Kühlmedien vorhanden sein.

Das Restgas verlässt die Absorptionsvorrichtung 8 in deren Kopfbereich und wird im Restgaserhitzer 2 erhitzt, um dann in einen Restgasreaktor 11 zu gelangen, in dem in der Regel katalytisch restliches im Restgas enthaltenes NOₓ und ggf. N₂O entfernt werden. Schließlich durchströmt das Restgas eine Restgasturbine 18 zur Energierückgewinnung bei der Entspannung des Restgases in die Atmosphäre.

Allgemein ist die Anzahl und Abfolge der zur Erhitzung des Restgases genutzten Wärmetauscher (Restgaserhitzer, Wärmetauscher mit anderen Heizmedienmedien) nicht beschränkt. Anzahl und Abfolge wird durch fertigungs-, aufstellungs- oder infrastrukturelle technische Faktoren und Designanforderungen bestimmt. An den Stellen 12a, 12b können jeweils weitere Restgaserhitzer oder Wärmetauscher mit anderen Heizmedien vorhanden sein.

Außerdem weist die Anlage eine funktionelle Einheit 9 auf zur Aufbereitung der in der Absorptionsvorrichtung 8 erzeugten Produktsäure unter Nutzung des Sekundärluftstroms. Dieser Sekundärluftstrom ist ein Zweigstrom, der aus der vom Luftverdichter 15 erzeugten Verbrennungsluft stromaufwärts des Reaktors 1 abgezweigt wird. Dieser Sekundärluftstrom kann nach dem Verlassen der funktionellen Einheit 10 dem Prozessgasstrom, beispielsweise stromabwärts des Kühlers und Kondensators 4, zugeführt werden über Leitung 9b. Dadurch erhöht sich der Sauerstoffgehalt des Prozessgases.

Figur 2 zeigt ein vereinfachtes Fließbild einer erfindungsgemäß modifizierten Zweidruckanlage zur Herstellung von Salpetersäure. Neben den oben beschriebenen Elementen 1 bis 18 weist die Anlage erfindungsgemäß noch den zusätzlichen Reaktor A auf, in dem das im Gasstrom enthaltene NO möglichst vollständig zu NO₂ oxidiert wird. In Figur 2 ist dies der beispielhafte zusätzliche Reaktor A, wobei ein Katalysator als regellose Schüttung in einem Radialreaktor vorliegt. Das konzentrische Katalysatorbett (regellose Schüttung) wird in diesem Beispiel von innen nach außen durchströmt. Es können allgemein gemäß der Erfindung auch mehrere erfindungsgemäße Reaktoren A vorgesehen sein. Der zusätzliche Reaktor A wird vom NO enthaltenden Prozessgas durchströmt. Durch die in diesen zusätzlichen Reaktoren ablaufende Oxidationsreaktion wird zusätzliche Wärme frei, welche das Prozessgas weiter erhitzt. Somit kann das Restgas im nachgeschalteten Restgaserhitzer 2 stärker erwärmt werden. Dies resultiert unmittelbar in einer besonders effizienten Rekuperation der zusätzlich erzeugten, nutzbaren Wärme durch Entspannung in der Restgasturbine 18. Diese Energie kann dann zum Beispiel direkt zum Antrieb der Kompressoren 15, 7 eingesetzt werden, was in Figur 2 durch die gestrichelt gezeichnete Welle 20 angedeutet wird.

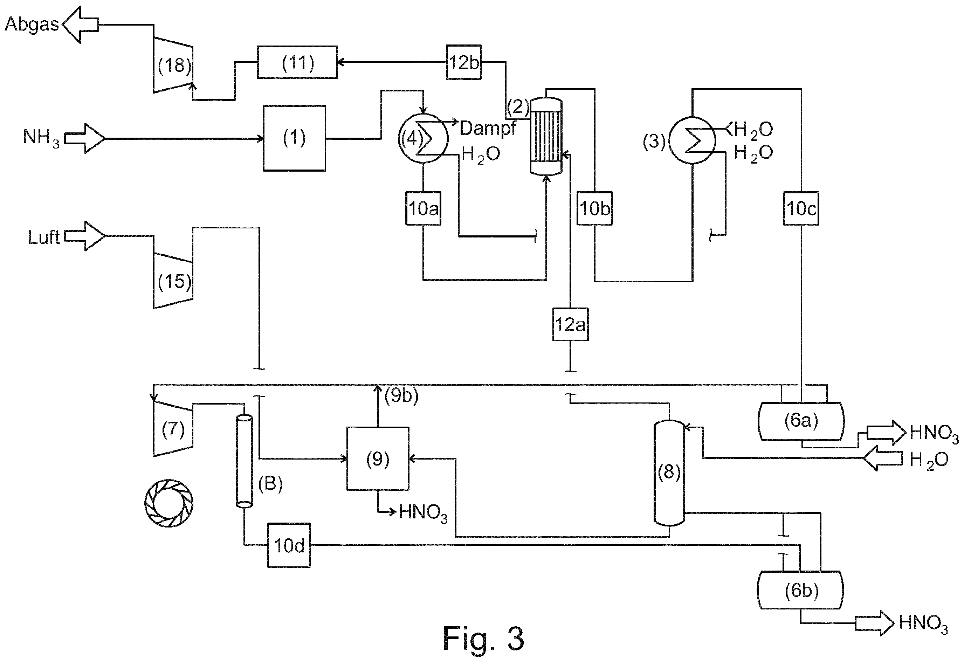

Figur 3 zeigt ein vereinfachtes Fließbild einer erfindungsgemäß modifizierten Zweidruckanlage zur Herstellung von Salpetersäure. Neben den oben beschriebenen Elementen 1 bis 18 weist die Anlage erfindungsgemäß noch den zusätzlichen Reaktor B auf, in dem das im Gasstrom enthaltene NO möglichst vollständig zu NO₂ oxidiert wird. In Figur 3 ist dies der beispielhafte zusätzliche Reaktor B, wobei ein Katalysator als Beschichtung im Rohrleitungssystem oder einem geeigneten Behälter vorliegt. Es können allgemein gemäß der Erfindung auch mehrere erfindungsgemäße Reaktoren B dieser Art vorgesehen sein. Der zusätzliche Reaktor B wird vom NO enthaltenden Prozessgas durchströmt. Durch die in diesem zusätzlichen Reaktor ablaufende Oxidationsreaktion wird zusätzliche Wärme frei, welche das Prozessgas weiter erhitzt. Somit kann in einem beliebigen, nachgeschalteten Wärmetauscher 10d mehr Wärme gewonnen werden. In modernen Zweidruckanlagen kann eine für die Oxidation von NO zu NO₂ bevorzugte Temperatur direkt durch Kompression in der zweiten Kompressionsstufe und die damit verbundene Kompressionswärme erhalten werden.

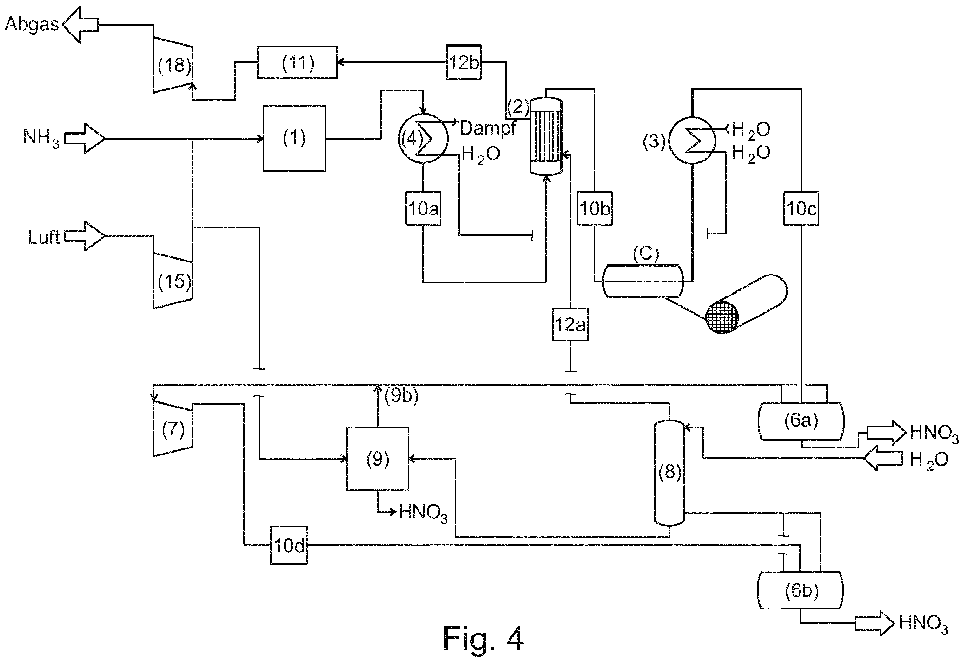

Figur 4 zeigt ein vereinfachtes Fließbild einer weiteren erfindungsgemäß modifizierten Zweidruckanlage zur Herstellung von Salpetersäure. Neben den oben beschriebenen Elementen 1 bis 18 weist die Anlage erfindungsgemäß noch den zusätzlichen Reaktor C auf, in dem das im Gasstrom enthaltene NO möglichst vollständig zu NO₂ oxidiert wird. In Figur 4 ist dies der beispielhafte zusätzliche Reaktor C, wobei ein Katalysator als geordnete Packung in Form von Wabenkörpern in das Rohrleitungssystem integriert oder als solche in einem geeigneten Reaktorbehälter vorliegt. Es können allgemein gemäß der Erfindung auch mehrere erfindungsgemäße Reaktoren C dieser Art vorgesehen sein. Der zusätzliche Reaktor C wird vom NO enthaltenden Prozessgas durchströmt. Durch die in diesen zusätzlichen Reaktoren ablaufende Oxidationsreaktion wird zusätzliche Wärme frei, welche das Prozessgas weiter erhitzt. Somit kann Wasser im nachgeschalteten Economizer 3 stärker erwärmt werden. Diese zusätzlich erzeugte, nutzbare Wärme kann, wie in der Zeichnung angedeutet, intern und ohne wesentliche zusätzliche Infrastruktur zur Dampferzeugung im Dampferzeuger 4 genutzt werden. Erzeugter Dampf kann zum Beispiel zum Maschinenantrieb durch eine Dampfturbine, zur Elektrizitätserzeugeng oder, wie auch Wasser im Falle der Nutzung des Economizers 3 für Warmwassererzeugung, zum Beispiel für Heizzwecke genutzt werden.

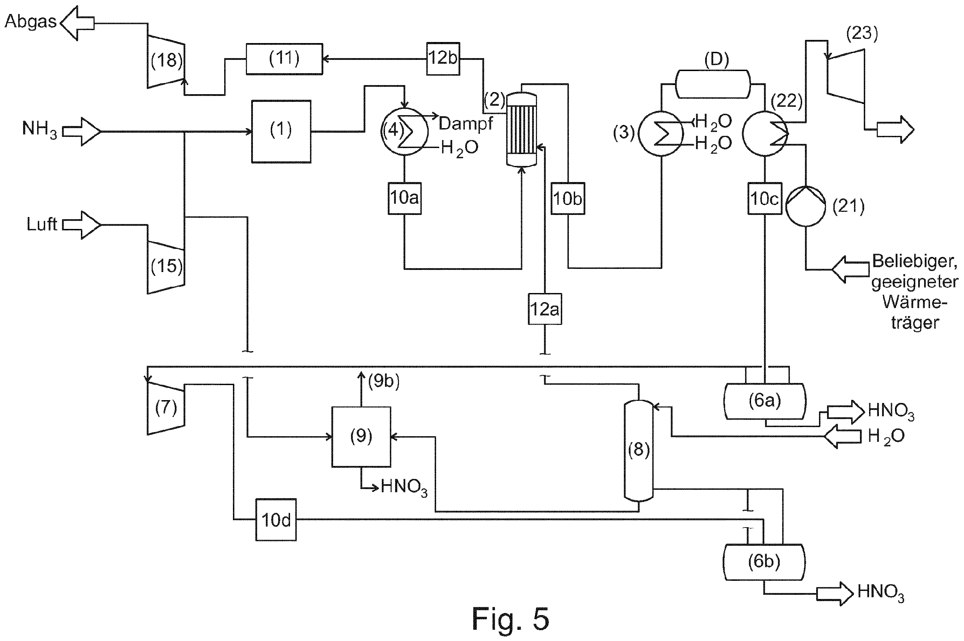

Figur 5 zeigt ein vereinfachtes Fließbild einer weiteren erfindungsgemäß modifizierten Zweidruckanlage zur Herstellung von Salpetersäure. Neben den oben beschriebenen Elementen 1 bis 18 weist die Anlage erfindungsgemäß noch den zusätzlichen Reaktor D auf, in dem das im Gasstrom enthaltene NO möglichst vollständig zu NO₂ oxidiert wird. Es können allgemein gemäß der Erfindung auch mehrere erfindungsgemäße Reaktoren D dieser Art vorgesehen sein. Der zusätzliche Reaktor D wird vom NO enthaltenden Prozessgas durchströmt. Durch die in diesen zusätzlichen Reaktoren ablaufende Oxidationsreaktion wird zusätzliche Wärme frei, welche das Prozessgas weiter erhitzt. Somit kann ein beliebiger, geeigneter Wärmeträger im nachgeschalteten Wärmetauscher 22 stärker erwärmt werden. Diese zusätzlich erzeugte nutzbare Wärme kann, wie in der Zeichnung angedeutet, im angedeuteten System zur Umwandlung von Wärme in mechanische Energie wiederverwertet werden. Solche externen Systeme, hier allgemein repräsentiert durch Kompression 21 und Entspannung 22 des Wärmeträgers, gestatten die besonders flexible Nutzung der erfindungsgemäß erzeugten zusätzlichen nutzbaren Wärme zur Erzeugung mechanischer Energie.

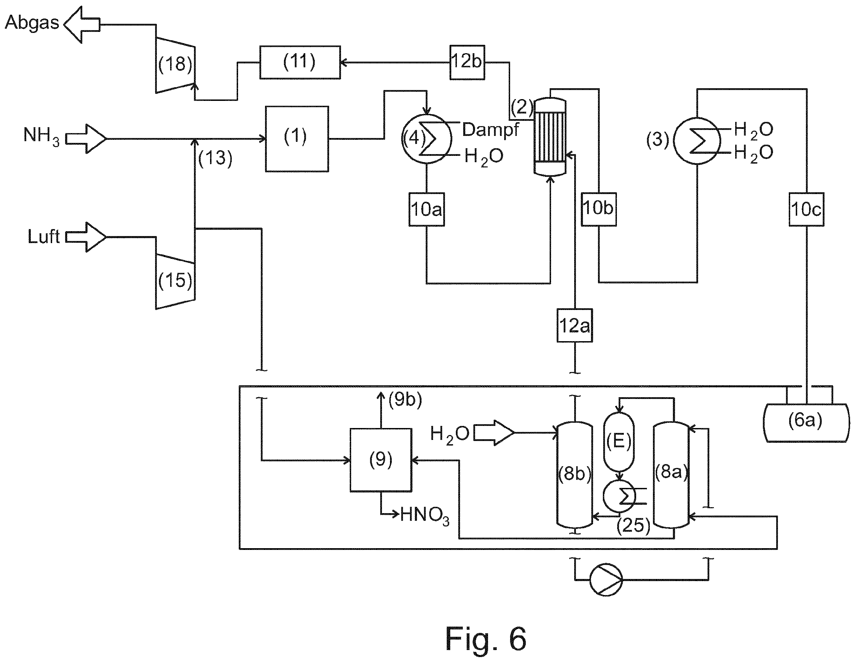

Figur 6 zeigt ein vereinfachtes Fließbild einer weiteren erfindungsgemäß modifizierten **Mono**druckanlage zur Herstellung von Salpetersäure. Die (Haupt-)Absorptionsvorrichtung 8, in der NO₂ gemäß Reaktion 3 (hier im Gegenstrom) in Wasser zu Salpetersäure absorbiert wird, ist in diesem Ausführungsbeispiel in zwei Apparate 8 a, 8b geteilt. Neben den oben beschriebenen Elementen 1 bis 18 weist die Anlage erfindungsgemäß noch den zusätzlichen Reaktor E auf, in dem das im Gasstrom enthaltene NO möglichst vollständig zu NO₂ oxidiert wird. Es können allgemein gemäß der Erfindung auch mehrere erfindungsgemäße Reaktoren E dieser Art vorgesehen sein. Der zusätzliche Reaktor E wird von NO enthaltendem Prozessgas durchströmt. Durch die in diesen zusätzlichen Reaktoren ablaufende Oxidationsreaktion wird zusätzliche Wärme frei, die im nachgeschalteten, beliebigen Wärmetauscher 25 wiedergewonnen werden kann. Durch die Anordnung zwischen den beiden (Haupt)-Absorptionsvorrichtungen 8a und 8b wird das benötigte Gesamtvolumen zur Absorption in den Apparaten 8a, 8b verringert.

Ähnliche alternative Varianten dieser Erfindung, sowohl im Mono- wie auch im Zweidruckverfahren, sind die Anordnung des zusätzlichen Reaktors (E) parallel zu nur einem Absorptionsapparat 8 mittels Zwischenentnahme oder auch Anordnung des zusätzlichen Reaktors E zwischen Kühler/Kondensator 6 und Absorptionsapparat 8.

### Bezugszeichenliste

- 1: NH₃-Oxidationsreaktor
- 2: Restgaserhitzer
- 3: Economizer
- 4: Dampferzeuger
- 6 a: Kühler/Kondensator
- 6 b: Kühler/Kondensator
- 7: Kompressionsstufe/Kompressor
- 8: Absorptionsvorrichtung
- 8 a: Absorptionsvorrichtung
- 8 b: Absorptionsvorrichtung
- 9: funktionelle Einheit
- 9 b: Leitung
- 10: Restgasreaktor
- 10 a: weiterer Restgaserhizer, Economizer oder Wärmetauscher
- 10 b: weiterer Restgaserhitzer, Economizer oder Wärmetauscher
- 10 c: weiterer Restgaserhitzer, Economizer oder Wärmetauscher
- 10 d: weiterer Restgaserhitzer, Economizer oder Wärmetauscher
- 11: Restgasreaktor
- 12 a: weiterer Restgaserhitzer oder Wärmetauscher
- 12 b: weiterer Restgaserhitzer oder Wärmetauscher
- 15: Luftverdichter/Kompressor
- 18: Restgasturbine
- 20: Welle
- 21: Kompression
- 22: Entspannung/nachgeschalteter Wärmetauscher
- 25: nachgeschalteter Wärmetauscher
- A: zusätzlicher Reaktor
- B: zusätzlicher Reaktor
- C: zusätzlicher Reaktor
- D: zusätzlicher Reaktor
- E: zusätzlicher Reaktor

## Patentansprüche

1. Verfahren zur Herstellung von Salpetersäure durch Oxidation von Ammoniak mit Sauerstoff in der Gegenwart von Katalysatoren zu Stickstoffmonoxid enthaltendem Prozessgas in einem Oxidationsreaktor (1), wobei dem gebildeten Stickstoffmonoxid im Laufe des weiteren Prozesses sauerstoffhaltiges Gas zugeführt wird und Stickstoffmonoxid zu Stickstoffdioxid oxidiert wird, das mit Wasser in einer Absorptionsvorrichtung (8) zu Salpetersäure, salpetriger Säure und/oder Lösungen von Nitraten und/oder Nitriten umgesetzt wird, **dadurch gekennzeichnet, dass** die Oxidation des Stickstoffmonoxids zu Stickstoffdioxid in mindestens einem im Strömungsweg des Prozessgases zwischen dem Oxidationsreaktor (1) und der Absorptionsvorrichtung (8) angeordneten und von dem Stickstoffmonoxid enthaltenden Prozessgas durchströmten zusätzlichen Reaktor (A, B, C, D) erfolgt und/oder dass die Oxidation des Stickstoffmonoxids zu Stickstoffdioxid in mindestens einem parallel zur Absorptionsvorrichtung (8) angeordneten zusätzlichen Reaktor (E) erfolgt, der so mit der Absorptionsvorrichtung (8) verschaltet ist, dass dieser von Stickstoffmonoxid enthaltendem Prozessgas durchströmt wird; wobei der zusätzliche Reaktor (A, B, C, D, E) ein Behälter beliebiger Form ist, der mit einem Katalysator für die Oxidationsreaktion von Stickstoffmonoxid zu Stickstoffdioxid beschickt ist.

2. Verfahren nach Anspruch 1, **dadurch gekennzeichnet, dass** der zusätzliche Reaktor (A, B, C, D, E) so im Verfahren angeordnet ist, dass die Eintrittstemperatur des NO enthaltenden Prozessgases in den Reaktor (A, B, C, D, E) 160 °C - 350 °C beträgt, bevorzugt 200 °C - 340 °C.

3. Verfahren nach Anspruch 1 oder 2, **dadurch gekennzeichnet, dass** der zusätzliche Reaktor (A) im Strömungsweg des Prozessgases stromabwärts des Oxidationsreaktors (1) und stromaufwärts eines Restgaserhitzers (2) angeordnet ist, und/oder der zusätzliche Reaktor (B) im Strömungsweg des Prozessgases stromabwärts einer zusätzlichen Kompressionsstufe (7) zur Verdichtung des Prozessgases auf den gewünschten Absorptionsdruck und stromaufwärts eines Wärmetauschers angeordnet ist, und/oder der zusätzliche Reaktor (C) im Strömungsweg des Prozessgases stromabwärts des Oxidationsreaktors (1) und stromaufwärts eines Economizers (3) angeordnet ist, und/oder der zusätzliche Reaktor (D) im Strömungsweg zwischen einem Economizer (3) und einem Wärmetauscher (22) angeordnet ist.

4. Verfahren nach einem der Ansprüche 1 bis 3, **dadurch gekennzeichnet, dass** ein zusätzlicher Reaktor, in dem die NO-Oxidation lokalisiert abläuft, parallel zu der Absorptionsvorrichtung (8), in der die Absorption von NO₂ in Wasser abläuft, angeordnet ist und Einbindungs- und Zuführungspunkte zu dieser Absorptionsvorrichtung (8) aufweist.

5. Verfahren nach einem der Ansprüche 1 bis 4, **dadurch gekennzeichnet, dass** der zusätzliche Reaktor (D), in dem die NO-Oxidation lokalisiert abläuft, im Strömungsweg des Prozessgases stromabwärts des Oxidationsreaktors (1) zur NH3-Verbrennung und stromaufwärts eines Wärmetauschers (22) angeordnet ist, der die Wärme in ein System transferiert, welches einen thermodynamischen Prozess zur Umwandlung von Wärme in mechanische Energie vorsieht.

6. Verfahren nach einem der Ansprüche 1 bis 5, **dadurch gekennzeichnet, dass** der zusätzliche Reaktor (E), in dem die NO-Oxidation lokalisiert abläuft, im Strömungsweg des Prozessgases stromabwärts des Oxidationsreaktors (1) zur NH3-Verbrennung zwischen zwei Vorrichtungen (8a, 8b), in denen die Absorption von NO₂ in Wasser abläuft, angeordnet ist.

7. Verfahren nach einem der Ansprüche 1 bis 6, **dadurch gekennzeichnet, dass** der zusätzliche Reaktor (A, B, C, D, E) ein Behälter beliebiger Form ist, dessen Gesamtgasinhalt so groß ist, dass die Oxidation von Stickstoffmonoxid zu Stickstoffdioxid als Gasphasenreaktion weitgehend vollständig abläuft.

8. Verfahren nach einem der Ansprüche 1 bis 7, **dadurch gekennzeichnet, dass** der zusätzliche Reaktor als Radialbettreaktor ausgebildet ist, umfassend ein konzentrisches Katalysatorbett, welches vom Prozessgas entweder von innen nach außen oder von außen nach innen durchströmt wird.

9. Verfahren nach einem der Ansprüche 1 bis 8, **dadurch gekennzeichnet, dass** der zusätzliche Reaktor (A, B, C, D, E) eine Rohrleitung für das Stickstoffmonoxid enthaltende Prozessgas ist, die mit einem Katalysator für die Oxidation von Stickstoffmonoxid zu Stickstoffdioxid beschickt ist.

10. Verfahren nach Anspruch 9, **dadurch gekennzeichnet, dass** der Katalysator für die Oxidation von Stickstoffmonoxid zu Stickstoffdioxid ein mit katalytisch aktiven Materialien beschichteter Wabenkörper ist, der in die Rohrleitung direkt integriert ist.

11. Anlage zur Herstellung von Salpetersäure umfassend mindestens die folgenden Elemente:
A) mindestens einen Oxidationsreaktor (1) zur Ammoniakoxidation ausgestattet mit mindestens einer Zuleitung für ein Ammoniak und Sauerstoff enthaltendes Eduktgasgemisch und mit mindestens einer Ableitung für ein Stickstoffmonoxid (NO) enthaltendes Prozessgas,
B) einen Katalysator für die Oxidation von Ammoniak mit Sauerstoff im Innern des Oxidationsreaktors (1),
C) mindestens eine Absorptionsvorrichtung (8) zur Absorption von Stickstoffdioxid (NO₂) und Bildung von Salpetersäure (HNO₃), salpetriger Säure (HNO₂) oder Lösungen von Nitraten und/oder Nitriten, und
D) mindestens einen zwischen dem Oxidationsreaktor (1) und der Absorptionsvorrichtung (8) oder stromabwärts der Absorptionsvorrichtung angeordneten und von dem NO enthaltenden Prozessgas durchströmten zusätzlichen Reaktor (A, B, C, D) zur Oxidation von NO zu NO₂ und/oder mindestens einen parallel zur Absorptionsvorrichtung (8) angeordneten zusätzlichen Reaktor (E) zur Oxidation von NO zu NO₂, der so mit der Absorptionsvorrichtung (8) verschaltet ist, dass dieser von NO enthaltendem Prozessgas durchströmt wird; wobei im zusätzlichen Reaktor (A, B, C, D, E) die Oxidationsreaktion von Stickstoffmonoxid zu Stickstoffdioxid an einem Katalysator erfolgt.

12. Anlage nach Anspruch 11, **dadurch gekennzeichnet, dass** diese weiterhin mindestens einen Restgaserhitzer (2) mit Wärmetauscherfunktion umfasst, welcher mit der Absorptionsvorrichtung (8) in Wirkverbindung steht und welcher von einem die Absorptionsvorrichtung (8) verlassenden Restgasstrom durchströmt wird, wobei der zusätzliche Reaktor (A) zwischen dem Oxidationsreaktor (1) und einem Restgaserhitzer (2) angeordnet ist.

13. Anlage nach Anspruch 11 oder 12, **dadurch gekennzeichnet, dass** diese weiterhin mindestens einen Restgaserhitzer (2) mit Wärmetauscherfunktion umfasst, welcher mit der Absorptionsvorrichtung (8) in Wirkverbindung steht und welcher von einem die Absorptionsvorrichtung (8) verlassenden Restgasstrom durchströmt wird und die Anlage weiterhin eine zusätzliche Kompressionsstufe (7) zur Verdichtung des Prozessgases auf den gewünschten Absorptionsdruck umfasst, wobei der zusätzliche Reaktor zwischen der Kompressionsstufe (7) und einem Restgaserhitzer angeordnet ist oder zwischen der Kompressionsstufe (7) und der Absorptionsvorrichtung (8) angeordnet ist.

14. Anlage nach einem der Ansprüche 11 bis 13, **dadurch gekennzeichnet, dass** diese weiterhin mindestens einen Restgaserhitzer (2) mit Wärmetauscherfunktion umfasst, welcher mit der Absorptionsvorrichtung (8) in Wirkverbindung steht und welcher von einem die Absorptionsvorrichtung (8) verlassenden Restgasstrom durchströmt wird und die Anlage weiterhin mindestens einen von dem Prozessgasstrom durchströmten Economizer (3) umfasst, wobei der zusätzliche Reaktor (C) zwischen einem Restgaserhitzer (2) und dem Economizer (3) angeordnet ist.

15. Anlage nach einem der Ansprüche 11 bis 14, **dadurch gekennzeichnet, dass** diese mindestens zwei zusätzliche Reaktoren (A, B, C, D, E) zur Oxidation von NO zu NO₂ umfasst, von denen wenigstens einer zwischen dem Oxidationsreaktor (1) und einem Restgaserhitzer (2) angeordnet ist und von denen wenigstens einer zwischen einer zusätzlichen Kompressionsstufe (17) zur Verdichtung des Prozessgases auf den gewünschten Absorptionsdruck und der Absorptionsvorrichtung angeordnet ist, und/oder **dass** diese mindestens zwei zusätzliche Reaktoren (A, B, C, D, E) zur Oxidation von NO zu NO₂ umfasst, von denen wenigstens einer zwischen dem Oxidationsreaktor (1) und einem Restgaserhitzer (2) angeordnet ist und von denen wenigstens einer zwischen einem Restgaserhitzer (2) und mindestens einem von dem Prozessgasstrom durchströmten Economizer (3) angeordnet ist, und/oder **dass** diese mindestens zwei zusätzliche Reaktoren (A, B, C, D, E) zur Oxidation von NO zu NO₂ umfasst, von denen mindestens ein erster Reaktor (A, B, C, D) im Strömungsweg des Prozessgases zwischen dem Oxidationsreaktor (1) und einer Absorptionsvorrichtung (8) angeordnet ist und von denen mindestens ein weiterer Reaktor (E) im Strömungsweg entweder parallel zu einer Absorptionsvorrichtung (8) oder einer Absorptionsvorrichtung (8) im Strömungsweg nachgeschaltet oder zwischen zwei Absorptionsvorrichtungen (8 a, 8 b), in denen die Absorption von NO₂ in Wasser abläuft, angeordnet ist, und/oder **dass** mindestens ein zusätzlicher Reaktor parallel zu einer Absorptionsvorrichtung (8) angeordnet ist und mit dem oberen Drittel und der Mitte oder dem unteren Drittel der Absorptionsvorrichtung (8) verschaltet ist.

## Claims

1. A process for producing nitric acid by oxidation of ammonia with oxygen in the presence of catalysts to afford nitrogen monoxide-containing process gas in an oxidation reactor (1), wherein in the course of the further process oxygen-containing gas is supplied to the formed nitrogen monoxide and nitrogen monoxide is oxidized to afford nitrogen dioxide which is reacted with water in an absorption apparatus (8) to afford nitric acid, nitrous acid and/or solutions of nitrates and/or nitrites, **characterized in that** the oxidation of the nitrogen monoxide to afford nitrogen dioxide is effected in at least one additional reactor (A, B, C, D) arranged between the oxidation reactor (1) and the absorption apparatus (8) in the flow direction of the process gas and traversed by the nitrogen monoxide-containing process gas, and/or **in that** the oxidation of the nitrogen monoxide to afford nitrogen dioxide is effected in at least one additional reactor (E) arranged in parallel with the absorption apparatus (8) and connected to the absorption apparatus (8) such that said reactor is traversed by nitrogen monoxide-containing process gas; wherein the additional reactor (A, B, C, D, E) is a container of any desired shape charged with a catalyst for the oxidation reaction of nitrogen monoxide to afford nitrogen dioxide.

2. The process as claimed in claim 1, **characterized in that** the additional reactor (A, B, C, D, E) is arranged in the process such that the entry temperature of the NO-containing process gas into the reactor (A, B, C, D, E) is 160°C - 350°C, preferably 200°C - 340°C.

3. The process as claimed in claim 1 or 2, **characterized in that** the additional reactor (A) is arranged downstream of the oxidation reactor (1) and upstream of a residual gas heater (2) in the flow direction of the process gas, and/or
the additional reactor (B) is arranged downstream of an additional compression stage (7) for compressing the process gas to the desired absorption pressure and upstream of a heat exchanger in the flow direction of the process gas, and/or
the additional reactor (C) is arranged downstream of the oxidation reactor (1) and upstream of an economizer (3) in the flow direction of the process gas, and/or
the additional reactor (D) is arranged between an economizer (3) and a heat exchanger (22) in the flow direction.

4. The process as claimed in any of claims 1 to 3, **characterized in that** an additional reactor in which the NO oxidation proceeds in a localized manner is arranged in parallel with the absorption apparatus (8) in which the absorption of NO₂ in water proceeds and comprises connection and feed points to this absorption apparatus (8).

5. The process as claimed in any of claims 1 to 4, **characterized in that** in the flow direction of the process gas the additional reactor (D) in which the NO oxidation proceeds in a localized manner is arranged downstream of the oxidation reactor (1) for NH3 combustion and upstream of a heat exchanger (22) which transfers the heat into a system providing a thermodynamic process for conversion of heat into mechanical energy.

6. The process as claimed in any of claims 1 to 5, **characterized in that** in the flow direction of the process gas the additional reactor (E) in which the NO oxidation proceeds in a localized manner is arranged downstream of the oxidation reactor (1) for NH3 combustion between two apparatuses (8a, 8b) in which the absorption of NO₂ in water proceeds.

7. The process as claimed in any of claims 1 to 6, **characterized in that** the additional reactor (A, B, C, D, E) is a container of any desired shape whose total gas content is large enough for the oxidation of nitrogen monoxide to afford nitrogen dioxide as a gas-phase reaction to proceed largely completely.

8. The process as claimed in any of claims 1 to 7, **characterized in that** the additional reactor is in the form of a radial bed reactor comprising a concentric catalyst bed which is traversed by the process gas either from the inside outward or from the outside inward.

9. The process as claimed in any of claims 1 to 8, **characterized in that** the additional reactor (A, B, C, D, E) is a pipeline for the nitrogen monoxide-containing process gas which is charged with a catalyst for the oxidation of nitrogen monoxide to afford nitrogen dioxide.

10. The process as claimed in claim 9, **characterized in that** the catalyst for the oxidation of nitrogen monoxide to afford nitrogen dioxide is a honeycomb body coated with catalytically active materials which is directly integrated into the pipeline.

11. A plant for producing nitric acid comprising at least the following elements:
A) at least one oxidation reactor (1) for ammonia oxidation fitted with at least one feed conduit for an ammonia- and oxygen-containing reactant gas mixture and with at least one discharge conduit for a nitrogen monoxide (NO)-containing process gas,
B) a catalyst for the oxidation of ammonia with oxygen in the interior of the oxidation reactor (1),
C) at least one absorption apparatus (8) for absorption of nitrogen dioxide (NO₂) and formation of nitric acid (HNO₃), nitrous acid (HNO₂) or solutions of nitrates and/or nitrites, and
D) at least one additional reactor (A, B, C, D) for oxidation of NO to afford NO₂ arranged between the oxidation reactor (1) and the absorption apparatus (8) or downstream of the absorption apparatus and traversed by the NO-containing process gas, and/or at least one additional reactor (E) for oxidation of NO to afford NO₂ arranged in parallel with the absorption apparatus (8) and connected to the absorption apparatus (8) such that said reactor is traversed by NO-containing process gas; wherein in the additional reactor (A, B, C, D, E) the oxidation reaction of nitrogen monoxide to afford nitrogen dioxide is effected over a catalyst.

12. The plant as claimed in claim 11, **characterized in that** it further comprises at least one residual gas heater (2) having a heat exchanger function which is operatively connected to the absorption apparatus (8) and which is traversed by a residual gas stream exiting the absorption apparatus (8), wherein the additional reactor (A) is arranged between the oxidation reactor (1) and a residual gas heater (2).

13. The plant as claimed in claim 11 or 12, **characterized in that** it further comprises at least one residual gas heater (2) having a heat exchanger function which is operatively connected to the absorption apparatus (8) and which is traversed by a residual gas stream exiting the absorption apparatus (8), and the plant further comprises an additional compression stage (7) for compressing the process gas to the desired absorption pressure, wherein the additional reactor is arranged between the compression stage (7) and a residual gas heater or between the compression stage (7) and the absorption apparatus (8).

14. The plant as claimed in any of claims 11 to 13, **characterized in that** it further comprises at least one residual gas heater (2) having a heat exchanger function which is operatively connected to the absorption apparatus (8) and which is traversed by a residual gas stream exiting the absorption apparatus (8), and the plant further comprises at least one economizer (3) traversed by the process gas stream, wherein the additional reactor (C) is arranged between a residual gas heater (2) and the economizer (3).

15. The plant as claimed in any of claims 11 to 14, **characterized in that** it comprises at least two additional reactors (A, B, C, D, E) for oxidation of NO to afford NO₂, of which at least one is arranged between the oxidation reactor (1) and a residual gas heater (2) and of which at least one is arranged between an additional compression stage (17) for compressing the process gas to the desired absorption pressure and the absorption apparatus, and/or
it comprises at least two additional reactors (A, B, C, D, E) for oxidation of NO to afford NO₂, of which at least one is arranged between the oxidation reactor (1) and a residual gas heater (2) and of which at least one is arranged between a residual gas heater (2) and at least one economizer (3) traversed by the process gas stream, and/or
it comprises at least two additional reactors (A, B, C, D, E) for oxidation of NO to afford NO₂ of which at least one first reactor (A, B, C, D) is arranged between the oxidation reactor (1) and an absorption apparatus (8), in the flow direction of the process gas and of which at least one further reactor (E) is arranged either in parallel with an absorption apparatus (8) in the flow direction or downstream of an absorption apparatus (8) in the flow direction or between two absorption apparatuses (8 a, 8 b) in which the absorption of NO₂ in water proceeds, and/or
at least one additional reactor is arranged in parallel with an absorption apparatus (8) and connected to the upper third and the middle or the lower third of the absorption apparatus (8).

## Revendications

1. Procédé de production d'acide nitrique par oxydation de l'ammoniac avec de l'oxygène en présence de catalyseurs pour former un gaz de processus, contenant du monoxyde d'azote, dans un réacteur d'oxydation (1), le monoxyde d'azote formé étant alimenté en gaz, contenant de l'oxygène, au cours du processus ultérieur et le monoxyde d'azote étant oxydé pour former du dioxyde d'azote qui est mis à réagir avec de l'eau dans un dispositif d'absorption (8) pour former de l'acide nitrique, de l'acide nitreux et/ou des solutions de nitrates et/ou de nitrites, **caractérisé en ce que** l'oxydation du monoxyde d'azote en dioxyde d'azote est effectuée dans au moins un réacteur supplémentaire (A, B, C, D) qui est disposé dans le trajet d'écoulement du gaz de processus entre le réacteur d'oxydation (1) et le dispositif d'absorption (8) et qui est traversé par le gaz de processus contenant du monoxyde d'azote et/ou **en ce que** l'oxydation du monoxyde d'azote est effectuée pour former du dioxyde d'azote dans au moins un réacteur supplémentaire (E) qui est disposé parallèlement au dispositif d'absorption (8) et qui est relié au dispositif d'absorption (8) de façon à être traversé par un gaz de processus contenant du monoxyde d'azote ; le réacteur supplémentaire (A, B, C, D, E) étant un récipient de forme quelconque qui est chargé d'un catalyseur destiné à la réaction d'oxydation du monoxyde d'azote en dioxyde d'azote.

2. Procédé selon la revendication 1, **caractérisé en ce que** le réacteur supplémentaire (A, B, C, D, E) est disposé dans le procédé de sorte que la température d'entrée du gaz de processus contenant du NO dans le réacteur (A, B, C, D, E) soit de 160 °C à 350 °C, de préférence de 200 °C à 340 °C.

3. Procédé selon la revendication 1 ou 2, **caractérisé en ce que** le réacteur supplémentaire (A) est disposé dans le trajet d'écoulement du gaz de processus en aval du réacteur d'oxydation (1) et en amont d'un réchauffeur de gaz résiduel (2), et/ou le réacteur supplémentaire (B) est disposé dans le trajet d'écoulement du gaz de processus en aval d'un étage de compression supplémentaire (7) destiné à comprimer le gaz de processus à la pression d'absorption souhaitée et en amont d'un échangeur de chaleur, et/ou le réacteur supplémentaire (C) est disposé dans le trajet d'écoulement du gaz de processus en aval du réacteur d'oxydation (1) et en amont d'un économiseur (3), et/ou le réacteur supplémentaire (D) est disposé dans le trajet d'écoulement entre un économiseur (3) et un échangeur de chaleur (22).

4. Procédé selon l'une des revendications 1 à 3, **caractérisé en ce qu'**un réacteur supplémentaire, dans lequel l'oxydation du NO se déroule de manière localisée, est disposé parallèlement au dispositif d'absorption (8) dans lequel se déroule l'absorption du NO₂ dans l'eau, et comporte des points d'intégration et d'alimentation en direction de ce dispositif d'absorption (8).

5. Procédé selon l'une des revendications 1 à 4, **caractérisé en ce que** le réacteur supplémentaire (D), dans lequel se déroule l'oxydation du NO de manière localisée, est disposé dans le trajet d'écoulement du gaz de processus en aval du réacteur d'oxydation (1) destiné à la combustion de NH₃ et en amont d'un échangeur de chaleur (22) qui transfère la chaleur dans un système assurant un processus thermodynamique de conversion de la chaleur en énergie mécanique.

6. Procédé selon l'une des revendications 1 à 5, **caractérisé en ce que** le réacteur supplémentaire (E), dans lequel se déroule l'oxydation du NO de manière localisée, est disposé dans le trajet d'écoulement du gaz de processus en aval du réacteur d'oxydation (1) destiné à la combustion de NH₃ entre deux dispositifs (8a, 8b) dans lesquels se déroule l'absorption de NO₂ dans l'eau.

7. Procédé selon l'une des revendications 1 à 6, **caractérisé en ce que** le réacteur supplémentaire (A, B, C, D, E) est un récipient de forme quelconque dont le contenu total de gaz est si important que l'oxydation du monoxyde d'azote en dioxyde d'azote en tant que réaction en phase gazeuse est dans une large mesure complète.

8. Procédé selon l'une des revendications 1 à 7, **caractérisé en ce que** le réacteur supplémentaire est conçu sous la forme d'un réacteur à lit radial, comprenant un lit catalytique concentrique, qui est traversé par le gaz de processus soit de l'intérieur vers l'extérieur soit de l'extérieur vers l'intérieur.

9. Procédé selon l'une des revendications 1 à 8, **caractérisé en ce que** le réacteur supplémentaire (A, B, C, D, E) est une canalisation qui est destinée au gaz de processus contenant du monoxyde d'azote et qui est chargée d'un catalyseur destiné à l'oxydation du monoxyde d'azote en dioxyde d'azote.

10. Procédé selon la revendication 9, **caractérisé en ce que** le catalyseur destiné à l'oxydation du monoxyde d'azote en dioxyde d'azote est un corps en nid d'abeille qui est revêtu de matières catalytiquement actives et qui est intégré directement dans la canalisation.

11. Installation de production d'acide nitrique comprenant au moins les éléments suivants :
A) au moins un réacteur d'oxydation (1) qui est destiné à l'oxydation de l'ammoniac et qui est équipé d'au moins une conduite d'alimentation, destiné à un mélange des réactifs gazeux contenant de l'ammoniac et de l'oxygène, et d'au moins une conduite d'évacuation destinée à un gaz de processus contenant du monoxyde d'azote (NO),
B) un catalyseur destiné à l'oxydation de l'ammoniac avec de l'oxygène à l'intérieur du réacteur d'oxydation (1),
C) au moins un dispositif d'absorption (8) destiné à absorber le dioxyde d'azote (NO₂) et à former de l'acide nitrique (HNO₃), de l'acide nitreux (HNO₂) ou des solutions de nitrates et/ou de nitrites, et
D) au moins un réacteur supplémentaire (A, B, C, D), destiné à l'oxydation de NO en NO₂, qui est disposé entre le réacteur d'oxydation (1) et le dispositif d'absorption (8) ou en aval du dispositif d'absorption et qui est traversé par le gaz de processus contenant du NO et/ou au moins un réacteur supplémentaire (E), destiné à l'oxydation de NO en NO₂, qui est disposé parallèlement au dispositif d'absorption (8) et qui est relié au dispositif d'absorption (8) de façon à être traversé par le gaz de processus contenant du NO ; la réaction d'oxydation du monoxyde d'azote en dioxyde d'azote étant effectuée sur un catalyseur dans le réacteur supplémentaire (A, B, C, D, E).

12. Installation selon la revendication 11, **caractérisée en ce qu'**elle comprend en outre au moins un réchauffeur de gaz résiduel (2) à fonction d'échangeur de chaleur qui est relié fonctionnellement au dispositif d'absorption (8) et qui est traversé par un flux de gaz résiduel quittant le dispositif d'absorption (8), le réacteur supplémentaire (A) étant disposé entre le réacteur d'oxydation (1) et un réchauffeur de gaz résiduel (2).

13. Installation selon la revendication 11 ou 12, **caractérisée en ce qu'**elle comprend en outre au moins un réchauffeur de gaz résiduel (2) à fonction d'échangeur de chaleur qui est relié fonctionnellement au dispositif d'absorption (8) et qui est traversé par un flux de gaz résiduel quittant le dispositif d'absorption (8) et l'installation comprend en outre un étage de compression supplémentaire (7) destiné à comprimer le gaz de processus à la pression d'absorption souhaitée, le réacteur supplémentaire étant disposé entre l'étage de compression (7) et un réchauffeur de gaz résiduel ou étant disposé entre l'étage de compression (7) et le dispositif d'absorption (8).

14. Installation selon l'une des revendications 11 à 13, **caractérisée en ce qu'**elle comprend en outre au moins un réchauffeur de gaz résiduel (2) à fonction d'échangeur de chaleur qui est relié fonctionnellement au dispositif d'absorption (8) et qui est traversé par un flux de gaz résiduel quittant le dispositif d'absorption (8) et l'installation comprend en outre au moins un économiseur (3) qui est traversé par le flux de gaz de processus, le réacteur supplémentaire (C) étant disposé entre un réchauffeur de gaz résiduel (2) et l'économiseur (3).

15. Installation selon l'une des revendications 11 à 14, **caractérisée en ce qu'**elle comprend au moins deux réacteurs supplémentaires (A, B, C, D, E), destinés à l'oxydation de NO en NO₂, dont l'un au moins est disposé entre le réacteur d'oxydation (1) et un réchauffeur de gaz résiduel (2) et dont l'un au moins est disposé entre un étage de compression supplémentaire (17), destiné à comprimer le gaz de processus à la pression d'absorption souhaitée, et le dispositif d'absorption, et/ou **en ce qu'**elle comprend au moins deux réacteurs supplémentaires (A, B, C, D, E), destinés à l'oxydation de NO en NO₂, dont l'un au moins est disposé entre le réacteur d'oxydation (1) et un réchauffeur de gaz résiduel (2) et dont l'un au moins est disposé entre un réchauffeur de gaz résiduel (2) et au moins un économiseur (3), et/ou **en ce qu'**elle comprend au moins deux réacteurs supplémentaires (A, B, C, D, E), destinés à l'oxydation de NO à NO₂, dont au moins un premier réacteur (A, B, C, D) est disposé dans le trajet d'écoulement du gaz de processus entre le réacteur d'oxydation (1) et un dispositif d'absorption (8) et dont au moins un autre réacteur (E) est disposé parallèlement à un dispositif d'absorption (8) dans le trajet d'écoulement ou en aval d'un dispositif d'absorption (8) dans le trajet d'écoulement ou entre deux dispositifs d'absorption (8a, 8b) dans lesquels se déroule l'absorption de NO₂ dans l'eau, et/ou **en ce qu'**au moins un réacteur supplémentaire est disposé parallèlement à un dispositif d'absorption (8) et est relié au tiers supérieur et à la moitié ou au tiers inférieur du dispositif d'absorption (8).
